# EUROPEAN PATENT SPECIFICATION

(11) **EP 0 618 951 B1**
(45) Date of publication and mention of the grant of the patent: **04.09.1996**
(21) Application number: 92924943.1
(22) Date of filing: 11.12.1992
(51) Int. Cl.: C10K 3/00, C01B 3/24, C09C 1/48

(54) **A METHOD FOR COMBUSTION OF HYDROCARBONS**
METHODE ZUR VERBRENNUNG VON KOHLENWASSERSTOFFEN
PROCEDE DE COMBUSTION DES HYDROCARBURES

(30) Priority: 12.12.1991 NO 914909
(43) Date of publication of application: 12.10.1994
(73) Proprietor: KVAERNER ENGINEERING A/S, N-1324 Lysaker (NO)
(72) Inventor: LYNUM, Steinar, N-0284 Oslo (NO); HAUGSTEN, Kjell, N-0379 Oslo (NO); HOX, Ketil, N-7021 Trondheim (NO); HUGDAHL, Jan, N-7011 Trondheim (NO); MYKLEBUST, Nils, N-7030 Trondheim (NO)
(74) Representative: Baverstock, Michael George Douglas
(86) International application number: NO9200200
(87) International publication number: WO9312205

(56) References cited:
- DD-A- 211 457
- DD-A- 276 098
- DE-A- 2 413 558

## Description

The invention concerns a method for reducing the carbon content in a feed flow of natural gas or other hydrocarbon gases for a combustion process in order thereby to eliminate to the desired degree or at least to reduce the discharge of carbon dioxides in the combustion of the gas, e.g. in connection with a gas-fired power station.

During the combustion of fossil fuels, coal, natural gas and other hydrocarbons, both water in the form of vapour and carbon dioxide will be found in the waste gases. The proportional incidence between these two gases will be dependent on the quantitive ratio of carbon to hydrogen in the fuel concerned. Coal will produce almost only carbon dioxide, methane will produce water and carbon dioxide in the ratio of 2:1, while hydrogen will only produce water. In the efforts to reduce the greenhouse effect, the discharges of carbon dioxide are becoming ever less acceptable. Thus it is vitally important to limit these discharges,the best best solution being to eliminate them entirely.

The object of the present invention is to improve this situation by providing a method for reducing the carbon content of natural gas and hydrocarbon gas. This reduction should be capable of being implemented in such a manner that a desired degree of reduction of the CO₂ content can be achieved after a combustion. The reduction can extend all the way through to the use of pure hydrogen as a fuel, thus completely avoiding the discharges of CO₂.

Thus a further object of the invention is also to make it possible for natural gas to be used as a fuel with a greatly reduced production of carbon dioxide, e.g. in a gas turbine.

These objects are achieved by a method which according to the invention is characterized by the features in the claims presented.

From DD-A-211 457 is known a method and an apparatus for the production of carbon black and hydrogen in a plasma reaction chamber. Feed stock in the form of hydrocarbons as liquid or gas is introduced via nozzles in one end of the reaction chamber and is mixed into a hydrogen plasma stream. Carbon black is separated from the off gas and parts of the hydrogen formed are recycled for use as the plasma gas.

From DD-A-276 098 is known a method in which a part of a feed stream intended for a steam-hydrocarbon reforming process is decomposed to carbon black in a plasma reaction chamber. A commercial process for the production of hydrogen involves two steps. The first step is the steam reforming of a hydrocarbon to give a gas consisting mainly of carbon monoxide and hydrogen. This gas is then reacted with steam at a lower temperature to shift the carbon monoxide to carbon dioxide and hydrogen. Separation of the carbon dioxide yields a product hydrogen stream. The process yields a great excess of carbon dioxide which is considered to be a product poor in energy and of little economic value. The invention relates to a method of decomposing a part of the natural gas into a high-grade carbon black without lowering the amount of synthesis gas.

The invention is based on the fact that it is possible to decompose hydrocarbons pyrolitically into carbon and hydrogen. By using pure hydrogen as a fuel the discharge of carbon dioxide will be eliminated. If carbon is removed from the natural gas or the hydrocarbon gas which is used as a fuel, the discharge of carbon dioxide will be reduced before the combustion.

A reduction of this kind can be carried out by performing a complete or partial conversion of natural gas or hydrocarbon gases in a feed stream to a combustion process . The feed stream is decomposed to the desired degree into carbon and hydrogen, whereof the natural gas with the reduced carbon content goes to combustion and the carbon constituent is removed from the process for separate application. Such a reduction can also be performed by converting a partial stream of the natural gas or the hydrocarbon gas.

In both cases the decomposition into carbon and hydrogen will require energy. The energy content in the gases with reduced carbon content is lower than in pure natural gas or hydrocarbon gas since the liberated carbon represents the lost energy. The result will be that more gas in total has to be supplied to the process in order to achieve the same net effect as from pure natural gas or hydrocarbon gas. The extent of this additional amount will be dependent on the degree to which the carbon content has to be reduced, i.e. the extent to which a conversion has to be performed, and also on the efficiency of the combustion process concerned.

The object is to be able to use pure hydrogen as a combustion gas in order thereby to be able to completely eliminate the CO₂ discharges.

At existing plants, however, there will be operating conditions which prevent the use of pure hydrogen, thus making it necessary to add a certain amount of hydrocarbons.

The process is therefore designed so as to offer the possibility of adding a certain amount of natural gas or hydrocarbon gas to the hydrogen stream and the amount can be adjusted according to the operating conditions.

After a combustion process, the waste gases are purified by methods known in the art and the purification methods are often extremely expensive, as for example in the case of catalytic purification.

It has now been discovered that the expenses involved in the conversion of natural gas or hydrocarbon gas which are used as a fuel for a combustion plant, i.e. before combustion, can be compensated for, thus enabling an economically justifiable process to be achieved despite the energy loss in the combustion stream. This is achieved by producing pure carbon in addition to hydrogen in the pyrolytic process in the method according to the invention. The carbonaceous material will be present in the form of carbon black and as such a material will have a very high value. Carbon black can, e.g., be used as a reduction agent in the metallurgical industry or on the conventional "carbon black market". If the carbonaceous material is used for anodes in the aluminium industry, this will entail substantial improvements both from the environmental and the economic point of view, since the new anodes will not pollute either the electrolyte and thus the product or the environment by the discharge of sulphur and tar.

Thus by means of the invention a highly favourable combination has been obtained of financially profitable industrial production and conservation of the environment, i.e. a reduction in pollution.

In the following section the invention will be described in more detail by means of an example of the use of the method.

As an example, the operation of a gas-fired power station based on natural gas as its energy source has been chosen. The example is intended to illustrate the main principles of the invention. Other applications of the invention could be the production of pure hydrogen and the use of the method in all processes where natural gas or another hydrocarbon are used as the energy source. The invention is particularly well suited in connection with power production with fuel cells based on hydrogen as the means of combustion.

In the supply line to a gas-fired power station, which, e.g., is operated by the use of natural gas, e.g. methane, there is provided a reactor which is operated according to the pyrolytic principle with a plasma torch and which causes a decomposition of the incoming natural gas or hydrocarbon gas into a constituent of hydrogen and a constituent of carbon particles. The reactor may be located in a branch line or a line bypassing the reactor. The method of operation of such a reactor and the design of a plasma torch for this are described in the applicant's simultaneous Norwegian patent applications 91 4904 and 91 4907. As described in these documents, a quality control can be performed for the carbon constituent. The hydrogen formed is also used via a return line as a plasma-forming gas for the torch, thus enabling this entire reactor to be operated without causing any pollution.

The hydrogen gas from the reactor is then passed to the gas turbine where it is used either alone or together with hydrocarbons (methane) as fuel in the gas turbine. The gas turbine is operated in a conventional manner. However, there is one major difference, which is that the discharge of carbon dioxide is reduced or completely eliminated. The degree to which the discharges of carbon dioxide are reduced will be dependent on how large a proportion of the supply to the gas turbine is composed of pure hydrogen. Throughout the process, the proportion can be regulated in the entire area from no admixture of hydrogen to pure hydrogen.

## Claims

1. In a process for generating energy by the combustion of natural gas or hydrocarbon gas a method of reducing the discharge of carbon dioxide from the process which method includes the following steps:
- providing a feed stream of natural gas or hydrocarbon gas for use as fuel;
- feeding the gas stream to the combustion process where it is burnt to generate energy; and
- discharging the waste gases;
characterized in that:
- the entire feed stream is subjected before entering the combustion process to a pyrolytic process by means of a plasma torch in a decomposition reactor, the process yielding carbon, hydrogen, and, optionally undecomposed gas; and
- removing the carbon from the hydrogen and the undecomposed gas, if present, so that the gas stream exiting the reactor and entering the energy-producing combustion process contains substantially only hydrogen and, optionally, undecomposed gas.

2. A method according to claim 1, characterized in that the feed stream fed to the combustion process has substantially no carbon content and is essentially a hydrogen fuel.

## Patentansprüche

1. In einem Prozeß zur Energieerzeugung durch die Verbrennung von Erdgas oder Kohlenwasserstoffgas umfaßt eine Methode zum Reduzieren des Ausstoßes von Kohlendioxid bei dem Prozeß die folgenden Schritte:
- Schaffen eines Zuführstroms von Erdgas oder Kohlenwasserstoffgas zur Verwendung als Kraftstoff;
- Zuführen des Gasstroms in die Verbrennungskammer, wo er verbrannt wird, um Energie zu erzeugen; und
- Abführen der Abgase;
dadurch g e k e n n z e i c h n e t , daß:
der ganze Zuführstrom vor dem Eintreten in den Verbrennungsprozeß mittels eines Plasmabrenners in einem Zersetzungsreaktor einem pyrolytischen Prozeß unterzogen wird, wobei der Prozeß Kohlenstoff, Wasserstoff und fakultativ unzersetzte Gase liefert, und
- der Kohlenstoff aus dem Wasserstoff und dem unzersetzten Gas, falls vorhanden, entfernt wird, so daß der Gasstrom, der den Reaktor zündet und in den energieerzeugenden Verbrennungsprozeß eintritt, im wesentlichen nur Wasserstoff und fakultativ unzersetzte Gase enthalten sind.

2. Methode nach Anspruch 1,
dadurch **gekennzeichnet**, daß der Zuführstrom, der dem Verbrennungsprozeß zugeführt wird, im wesentlichen keinen Kohlenstoffgehalt hat und im wesentlichen ein Wasserstoff-Kraftstoff ist.

## Revendications

1. Procédé de réduction de l'évacuation d'anhydride carbonique dans une opération de création d'énergie par combustion de gaz naturel ou d'un hydrocarbure gazeux, le procédé comprenant les étapes suivantes :
- la formation d'un courant d'alimentation en gaz naturel ou en hydrocarbure gazeux destiné à être utilisé comme combustible,
- la transmission du courant gazeux à une opération de combustion dans laquelle il brûle en créant de l'énergie, et
- l'évacuation des gaz usés,
caractérisé en ce que
- la totalité du courant d'alimentation, avant d'arriver à l'opération de combustion, est soumise à une opération de pyrolyse à l'aide d'un chalumeau à plasma dans un réacteur de décomposition, l'opération donnant du carbone, de l'hydrogène et éventuellement un gaz non décomposé, et
- le procédé comprend l'extraction du carbone de l'hydrogène et du gaz non décomposé le cas échéant, de manière que le courant gazeux quittant le réacteur et arrivant à l'opération de combustion qui produit de l'énergie contienne pratiquement uniquement de l'hydrogène et éventuellement un gaz non décomposé.

2. Procédé selon la revendication 1, caractérisé en ce que le courant d'alimentation transmis à l'opération de combustion ne contient pratiquement pas de carbone et est essentiellement formé d'hydrogène combustible.
